# EUROPÄISCHE PATENTANMELDUNG

(11) **EP 2 905 501 A2**
(43) Veröffentlichungstag der Anmeldung: **12.08.2015**
(21) Anmeldenummer: 14002546.1
(22) Anmeldetag: 23.07.2014
(51) Int. Cl.: F16D 69/00, F16D 13/52, F16D 13/68

(54) **Kupplung mit fliegenden Reiblamellen**

(30) Priorität: 21.08.2013 DE 102013013782
(71) Anmelder: WEBO Werkzeugbau Oberschwaben GmbH, 88279 Amtzell (DE)
(72) Erfinder: Wittig, Axel, 88239 Wangen (DE); Skrabs, Alfred, 23774 Heiligenhafen (DE)
(74) Vertreter: Riebling, Peter

(57) **Zusammenfassung**

Kupplung bestehend aus einem drehend angetriebenen Außenlamellenträger (12), an dem eine Anzahl von axial verschiebbar gelagerten Metalllamellen (25) drehfest angeordnet sind, welche die Antriebsseite (1) der Kupplung ausbilden, und die Abtriebsseite durch einen Innenlamellenträger (13) gebildet ist, auf dessen axial gerichteter Verzahnung abtriebsseitige Metalllamellen (26) angeordnet, und im Zwischenraum (9) zwischen den Metalllamellen (25) der Antriebsseite (1) und den Metalllamellen (26) der Abtriebsseite (2) axial verschiebbare Reib- oder Bremslamellen (27, 28) angeordnet sind, wobei die Reib- oder Bremslamellen (27, 28) freifliegend ausgebildet sind und sich selbsttätig im Zwischenraum (9) zwischen den antriebs- und abtriebsseitigen Metalllamellen (25, 26) in radialer und axialer Richtung einstellen.

## Beschreibung

Die Erfindung betrifft eine Kupplung mit Reib- oder Bremslamellen nach dem Oberbegriff des Patentanspruches 1.

Die Erfindung betrifft sowohl Doppelreibungskupplungen nach der DE 10 2009 039 467 A1 oder DE 10 2010 051 446 A1 als auch Einfach-Kupplungen, z.B. nach der DE 692 387 C. Die genannten Kupplungen sind nach zwei verschiedenen Gestaltungsprinzipien ausgeführt. Das eine Gestaltungsprinzip wird als "Double-Side-Disc" und das zweite Prinzip als "Single-Side-Disc"-Prinzip bezeichnet.

Die beiden Funktionsangaben beziehen sich darauf, dass bei herkömmlichen Kupplungen an einem drehend angetriebenen Außenlamellenträger eine Anzahl von axial verschiebbar gelagerten Stahllamellen vorhanden ist, welche die Antriebsseite der Kupplung ausbilden.

Gegenüberliegend sind auf einer am Innenlamellenträger angeordneten, axial gerichteten Verzahnung Stahllamellen (abtriebsseitig) angeordnet, wobei im Zwischenraum zwischen den Stahllamellen der Antriebsseite und den Stahllamellen der Abtriebsseite die axial verschiebbaren Belags- oder Reiblamellen angeordnet sind. Generell kann das Gestaltungsprinzip auch dahingehend aufgebaut sein, das abtriebsseitig Belags- oder Reiblamellen und antriebsseitig Stahllamellen zum Einsatz kommen.

Das Double-Side-Disc-Prinzip besteht darin, dass die jeweilige Belagslamelle an beiden Seiten mit einem zugeordneten Reibbelag belegt ist, während bei dem Single-Side-Disc-Prinzip die Belagslamelle nur an einer Seite mit einem Reibbelag versehen ist, während der gegenüberliegende Reibbelag entweder auf der Stahllamelle der Abtriebsseite oder der Antriebsseite angeordnet ist.

Ein Stand der Technik, der ein Double-Side-Disc-Prinzip zeigt, ist beispielsweise mit dem Gegenstand der DE 10 2009 039 467 A1 bekannt geworden. Dort wird angenommen, dass die Antriebsseite mit der Drehzahl m1 und der Geschwindigkeit v1 umläuft. Beide Angaben beziehen sich auf die Drehzahl und Geschwindigkeit des Außenlamellenträgers mit seinen Außenlamellen.

Die Abtriebsseite ist im ungekuppelten Zustand mit der Drehzahl m2 = 0 und der Geschwindigkeit v2 = 0 ausgebildet. Beim Schließen der Kupplung wird damit die Belagslamelle und der Innenlamellenträger auf die Geschwindigkeit m2 = m1 beschleunigt und die Reibgeschwindigkeit v1 geht gegen Null.

Damit wird beträchtliche Reibwärme erzeugt, die überwiegend von den Außenlamellenträgern aufgenommen werden kann. Die Stahllamellen und somit Außenlamellen werden thermisch symmetrisch belastet.

Bei dem Single-Side-Disc-Prinzip nach dem Stand der Technik ist wiederum die Antriebsseite mit der Drehzahl m1 umlaufend, und zwar mit einer Geschwindigkeit v1. Der Außenlamellenträger ist mit den Außenlamellen versehen, die jedoch einseitig mit einem Reibbelag belegt sind. Die Abtriebsseite hat im ungekuppelten Zustand die Drehzahl m2 = 0 und die Geschwindigkeit v2 = 0.

Der Innenlamellenträger mit den Innenlamellen, die einseitig mit einem Reibbelag beklebt sind, stehen deshalb still. Beim Schließen der Kupplung wird m2 = m1 und die Reibgeschwindigkeit wird von v1 zu Null.

Die Reibwärme wird von den Innen- und Außenlamellen aufgenommen. Beide Lamellen werden asymmetrisch thermisch belastet. Eine solche Kupplung ist empfindlich gegen Überhitzung und einer Tellerung der Lamellen.

Bei dem bekannten Single-Side-Disc-Prinzip wird die Stahllamelle der Antriebs- und der Abtriebsseite gestanzt, und anschließend einseitig mit einem Reibbelag beklebt. Durch den nur ca. 20-prozentigen Traganteil (Anteil am Reibschluss) besteht im Betrieb an den Flanken im Bereich der Verzahnung des Innen- und Außenlamellenträgers Verschleiß (Einschlagkerben). Um diesen Verschleiß zu minimieren, ist es bekannt, die Innen- und Außenlamellenträger jeweils zu nitrieren, um eine höhere Härte der Verzahnung zu erreichen. Dadurch entstehen jedoch unerwünschte Mehrkosten.

Bei einem Paar von Innen- und Außenlamellenträgern nach dem Single-Side-Disc-Prinzip wird damit ein höherer Herstellungsbetrag aufgewendet als vergleichsweise bei Lamellenträgern nach dem Double-Side-Disc-Prinzip.

Demgemäß ist Nachteil des Standes der Technik, sowohl nach dem Double-Side-Disc-Prinzip als auch nach dem Single-Side-Disc-Prinzip, dass bei dem Double-Side-Disc-Prinzip ein höheren Fertigungsaufwand gegeben ist, weil auf einer Belagslamelle beidseitig Reibbeläge aufgeklebt werden müssen. Dadurch entstehen hohe Kosten, die unerwünscht sind.

Ferner muss eine solche Belagslamelle mehrschichtig aufgebaut sein, denn es bedarf eines inneren, hochfesten Kerns oder bevorzugt einer Kernscheibe aus Metall, die von beiden Seiten mit Belägen beklebt wird. Der Metallkern muss über seine Verzahnung das Drehmoment auf den Innenlamellenträger übertragen, was voraussetzt, dass eine von Reibbelägen umschlossene, mittlere Metallscheibe verwendet wird, um die erforderlichen Drehmomente über die Verzahnung auf den Innenlamellenträger zu übertragen.

Die hierfür erforderliche Dicke der Reiblamelle, die nach dem Stand der Technik aus einer mittleren Metallscheibe und beidseits aufgeklebten Reibbelägen besteht, hat eine unerwünschte Zunahme der bewegten Massen zur Folge, und damit wird das Trägheitsmoment der Kupplung erhöht, was unerwünscht ist.

Weiterhin müssen die Stahllamellen von der Antriebs- und der Abtriebsseite aufgrund des symmetrischen Wärmeeintrags in Richtung zum Innenlamellenträger (Abtriebsseite) eine besondere - der Wärmeleitung dienenden - Stärke (Dicke) aufweisen, was sich nachteilig auf die (zu minimierende) Gesamtlänge der Kupplung auswirkt. Werden nämlich die Stahllamellen auf der Abtriebsseite zu dünn gefertigt, fehlt es an der notwendigen Wärmeableitung und die Kupplung überhitzt.

Beim Single-Side-Disc-Prinzip entsteht eine asymmetrische thermische Belastung, weil die Stahllamellen der Antriebs- und der Abtriebsseite einseitig mit einem Reibbelag beklebt sind. Die Wärme wird sowohl zur Antriebs- als auch zur Abtriebsseite (also sowohl zum Innenlamellenträger als auch zum Außenlamellenträger) abgeführt, was zu einer dünneren Dicke der Stahllamellen auf der Antriebs- und Abtriebsseite führen könnte, jedoch ist damit eine erhöhte Tellerung (Durchbiegung) der Stahllamellen verbunden, die eine Überhitzung des Lamellenpaketes möglich erscheinen lässt.

Der Erfindung liegt deshalb ausgehend von den beiden Antriebsprinzipien einer Mehrscheibenkupplung mit zwischen einem Innen- und Außenlamellenträger angeordneten Reib- oder Bremslamellen die Aufgabe zugrunde, bei geringeren Herstellungskosten das Massenträgheitsmoment und das Gewicht der Kupplung zu reduzieren, wobei gleichzeitig eine Reduzierung der Baulänge bei verbessertem Wärmemanagement gegeben ist.

Die gestellte Aufgabe wird durch die Merkmale des Anspruches 1 gelöst.

Mit der Lösung der gestellten Aufgabe besteht der Vorteil, dass bezogen auf eine Kupplung nach dem Stand der Technik mit gleicher Drehmomentenübertragung bei der Kupplung nach der Erfindung eine kürzere Baulänge bei geringerer Wärmeentwicklung gegeben ist.

Wenn man die neuartige Kupplung auf die gleiche Baulänge wie den Stand der Technik bezieht, besteht der Vorteil, dass eine höhere Anzahl von Reibpaarungen auf der gleichen Baulänge untergebracht werden können, und somit ein höheres Drehmoment bei geringerer Wärmeentwicklung übertragen werden kann.

Wesentliches Merkmal der Erfindung ist, dass im Zwischenraum zwischen den Stahllamellen der Antriebs- und der Abtriebsseite nunmehr Reib- oder Bremslamellen angeordnet sind, die erfindungsgemäß nur noch als fliegende (Reib- oder Brems-) Lamellen ausgebildet sind.

Wenn in der folgenden Beschreibung die erfindungsgemäßen Reib- oder Bremslamellen als Kupplungslamellen bezeichnet werden, so ist dies nicht einschränkend zu verstehen. Es ist bekannt, dass bei hydraulischen Fahrzeugkupplungen die Kupplungslamellen auch als Bremslamellen arbeiten. Demzufolge bezieht sich der Schutzbereich der Erfindung sowohl auf Kupplungs- als auch auf Bremslamellen, obwohl der einfacheren Beschreibung wegen in der folgenden Beschreibung nunmehr Kupplungslamellen in der Form von Reiblamellen beschrieben werden.

Mit der Ausbildung der Reib- oder Bremslamellen als frei fliegend ausgebildete Lamellen besteht der Vorteil, dass im Gegensatz zur Ausbildung der (verzahnten) Belagslamellen nach dem Stand der Technik nunmehr die fliegend ausgebildeten Reiblamellen auf jegliche Verzahnung in Richtung auf den Innenlamellenträger verzichten können, weil sie sich in radialer Richtung im Zwischenraum zwischen den antriebs- und abtriebsseitigen Stahllamellen der Kupplung freifliegend selbsttätig einstellen. Es bedarf in Richtung zum Außen- und/oder Innenlamellenträger keiner radialen am Außen- oder Innenumfang angeordneter Verzahnungen

Die erfindungsgemäßen fliegenden Reiblamellen haben demnach weder eine Verzahnung zum Außenlamellenträger noch eine Verzahnung zum Innenlamellenträger. Sie stellen sich selbsttätig in radialer und axialer Richtung ein, weil sie sich entweder mit ihrem Außenumfang am Innenumfang des Außenlamellenträgers zentrieren oder wahlweise mit ihrem Innenumfang am Außenumfang des Innenlamellenträgers zentrieren. Der Ort der Zentrierung (am Innen- oder Außenumfang) hängt vom Innen- und Außendurchmesser der verwendeten scheibenförmigen Reiblamelle ab.

Der (radiale) Ort der Ausrichtung ergibt sich aus der Größe des Innendurchmessers im Vergleich zur Größe des Außendurchmessers der Kupplungslamelle im Hinblick auf den Abstand den der Innendurchmesser zum Außendurchmesser des Innenlamellenträgers oder im Hinblick auf den Abstand den der Außendurchmesser in Richtung auf den Innendurchmesser des Außenlamellenträgers hat. Die Zentrierung der Kupplungslamelle erfolgt an dem Teil von Innen- oder Außenlamellenträger, zu dem der Abstand am geringsten ist.

Diese Zentrierungsbereiche können daher auf eine drehmomentenübertragende Verzahnung verzichten, sie können also glatt ausgebildet sein. Selbstverständlich kann in diesem Bereich auch eine Verzahnung angeordnet sein, die jedoch nicht der Drehmomenten-Übertragung auf die Brems- oder Reiblamelle dient.

Die freifliegenden, sich radial selbsttätig einstellenden Kupplungslamellen stellen sich auch in axialer Richtung im Zwischenraum zwischen den antriebs- und abtriebsseitigen Stahllamellen selbsttätig ein, weil dieser Zwischenraum mit einem Öl oder einem anderen Wärmeträgermedium gefüllt ist, und hierdurch aufgrund von - während der Drehung auftretenden - Turbulenzen ein Lauf in einem Ölbad oder einem gasförmigen Wärmeträgermedium stattfindet, sodass die Reiblamellen im ungekuppelten Zustand mit etwa der Hälfte der Geschwindigkeit des Außenlamellenträgers umlaufen, wenn der Innenlamellenträger stillsteht. Sie werden demnach nur von der Strömung im Bereich zwischen den Metalllammellen mitgenommen.

Die Erfindung beansprucht auch eigenständigen Schutz für die Ausbildung der Reib- oder Belagslamelle. Der Unterschied zwischen der Reiblamelle nach dem Stand der Technik und der vorliegenden Erfindung lässt sich am besten durch Vergleich mit der DE 619 382 C erläutern. Während die DE 619 382 C eine Reiblamelle mit wahlweise verzahntem Außen- oder Innenumfang zeigt, sieht die Erfindung eine Reiblamelle vor, die weder eine Außenverzahnung noch eine Innenverzahnung oder andere drehmomentenübertragende Elemente aufweist. Sie ist demnach am Außen- und Innenumfang glatt, weil sie nicht auf eine drehfeste Verbindung mit dem Innen- oder Außen-Lamellenträger angewiesen ist. Dieser Unterschied ist auch durch Vergleich einer Reiblamelle nach der DE 31 00 586 A1 mit der Erfindung erkennbar. Die dort dargestellten Reiblamellen haben zwar keine Verzahnung am Außenumfang, jedoch Mitnehmer in Form von Bügeln, die in zugeordnete Aufnahmen am Innenumfang des Radgehäuses (entsprechend dem Außenlamellenträger) eingreifen. Auf solche Drehmomenten-übertragenden Mitnehmer am (Außen- und/oder Innen-) Umfang der Reiblamelle verzichtet die Erfindung.

Es wird angenommen, dass die Antriebsseite mit dem Außenlamellenträger mit der Drehzahl m1 und der Geschwindigkeit v1 umläuft.

Im nicht gekuppelten Zustand hat die Abtriebsseite eine Drehzahl m2 = 0 und eine Geschwindigkeit v2 = 0.

Die erfindungsgemäße Reiblamelle in der Ausbildung als schwimmender Reib- oder Bremsbelag richtet sich nun selbsttätig entweder am Innendurchmesser des Außenlamellenträgers an der Antriebsseite bei selbsttätiger Einstellung eines Abstandsspiels oder am Außendurchmesser des Innenlamellenträgers auf der Abtriebsseite ebenfalls unter selbsttätiger Einstellung eines radialen Außenabstandes aus.

Beim Schließen der Kupplung und/oder Bremse wird m2 = m1, und die Reibgeschwindigkeit der fliegenden Reiblamellen wird von ½ v1 zu Null.

Da die Reiblamelle freischwimmend ist, wird die Reibgeschwindigkeit bei Schaltbeginn immer ½ v1 als maximaler Wert sein, und im geschlossenen Zustand ist dieser Geschwindigkeitswert gleich Null.

Somit wird die Reibwärme gleichmäßig jeweils hälftig von der Außenlamelle und der Innenlamelle aufgenommen. Es kommt demzufolge zu einer gleichmäßigen thermischen Belastung von Innen- und Außenlamelle, und die thermische Belastung einer solchen erfindungsgemäßen Kupplung und/oder Bremse ist bei diesem Aufbau am geringsten.

Das heißt im Umkehrschluss, dass mit einem solchen Kupplungs- oder Bremsaufbau höhere Leistungen übertragen werden als vergleichsweise bei Kupplungs- oder Bremsaufbauten, die im Stand der Technik im Einsatz sind.

Aufgrund dieser geringeren thermischen Belastung ist es nun erstmals möglich, auch die Stahllamellen sowohl der Antriebs- als auch der Abtriebsseite sehr viel dünner auszugestalten, weil diese nur noch geringer Wärmeströme übertragen müssen.

Ein weiterer Vorteil der Erfindung liegt darin, dass die Reiblamelle als solche dünner aufgebaut werden kann. Im Vergleich zu einer Belagslamelle nach dem Stand der Technik, die mit einer Verzahnung drehfest mit dem abtriebsseitigen Innenlamellenträger gekuppelt ist, muss wegen der notwendigen Wärmeabführung und Drehmomentenübertragung eine Belagslamelle nach dem Stand der Technik immer mehrschichtig aufgebaut sein und wegen der Notwendigkeit der Drehmomentenübertragung eine mittlere Metallscheibe aufweisen.

Dieses Erfordernis entfällt nach der Erfindung, denn es reicht aus, die frei sich einstellende, fliegende Reiblamelle mindestens einschichtig auszubilden. Sie kann in einer bevorzugten Ausgestaltung aus einem einschichtigen Papiermaterial gebildet sein, welches möglicherweise mit einem Kunststoffmaterial getränkt ist. Ein solches Kunststoffmaterial, mit dem die Reiblamellen getränkt ist, soll der mechanischen Verfestigung des Papiermaterials dienen.

Selbstverständlich sieht die Erfindung auch vor, dass die erfindungsgemäße, fliegende Reiblamelle auch mehrschichtig aufgebaut ist. Sie kann aus verschiedenen Papierschichten bestehen, sie kann aber auch aus Papier-Kunststoff-Verbundwerkstoffen bestehen oder kann sogar aus textilen Fäden oder Garnen oder Kohlestofffasern gewebt oder gewirkt sein.

Unter anderem schließt die Erfindung nicht aus, dass die erfindungsgemäße fliegende Reiblamelle eine Metallscheibe trägt, obwohl die Erfindung - im Gegensatz zum Stand der Technik - hierauf nicht angewiesen ist

Es können also beliebige fliegende Reiblamellen mit einschichtigen oder mehrschichtigen, auch aus mehreren Verbundstoffen bestehende Reiblamellen verwendet werden.

Vom Massengewicht her ist die fliegende Reiblamelle auf jeden Fall leichter als vergleichsweise die zum Stand der Technik gehörende Belagslamelle, die stets einen Stahlkern aufweist. Damit gelingt es im entscheidenden Maß, die Massenträgheit der gesamten Kupplung zu reduzieren. Weil die Reiblamelle stets immer mit der halben Geschwindigkeit umläuft als vergleichsweise die Belagslamelle nach dem Stand der Technik, die stillsteht, besteht der Vorteil, dass ein sauberes und schnelleres Kuppeln möglich ist und dass der axiale Abstand zwischen der fliegend angeordneten Reiblamelle und der zugeordneten Stahllamelle auf der Antriebs- und Abtriebsseite nochmals reduziert werden kann, weil ein großvolumiger Ölfluss zur Verbesserung der Wärmeabfuhr nicht mehr notwendig ist. Es kann demnach auf großvolumige Ölströme im Zwischenraum zwischen der antriebs- und der abtriebsseitigen Stahllamelle verzichtet werden.

Weil die fliegende Reiblamelle nach der Erfindung bereits schon mit der halben Umdrehungsgeschwindigkeit im Ölbad mitläuft, ist ein weicheres Kuppeln gegeben.

Die Erfindung ist jedoch nicht auf Nasskupplungen oder Nass-Bremsen beschränkt, bei denen die Reiblamellen in einem Ölbad oder einem anderen gasförmigen Wärmeträgermedium laufen.

Ebenso betrifft die Erfindung auch trockene Kupplungen mit fliegenden Reibbelägen. Es wird auf jeden Fall auch ein geringerer Verschleiß an den einander zugeordneten Teilen erwartet, weil die Reiblamelle mit ihren Reibbelägen immer mit der halben Geschwindigkeit der Stahllamelle auf der Antriebsseite mitläuft, und hierdurch der Kupplungsschock oder der Kupplungsspitzenwert bei herkömmlichen Kupplungen nicht erreicht wird.

Der Begriff "Stahllamelle", der vorstehend verwendet wurde, soll nicht einschränkend für die Erfindung sein. Der Begriff "Stahllamelle" wird in verallgemeinerter Form als Metall-Lamelle verwendet, weil es nach der Erfindung nun erstmals möglich ist, statt Stahllamellen auch andere metallische Lamellen zu verwenden, insbesondere Lamellen aus einer Leichtmetalllegierung, was die Massenträgheit und das Gewicht der Kupplung noch weiter reduziert.

Demnach darf der Begriff Stahllamelle nicht einschränkend für die vorliegende Erfindung verstanden werden. Es wird stattdessen der allgemeinere Begriff "Metalllamelle" verwendet werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Schnitt durch eine erste Ausführungsform einer Kupplung nach dem Stand der Technik
Figur 2: Schnitt durch eine zweite Ausführungsform einer Kupplung nach dem Stand der Technik
Figur 3: ein Schnitt durch die erste Ausführungsform nach dem Stand der Technik gemäß Figur 1 mit Eintragung weiterer Einzelheiten
Figur 4: eine räumliche Darstellung einer Kupplung nach dem Stand der Technik gemäß Figur 1 und Figur 3
Figur 5: ein Schnitt durch eine Ausführungsform nach der Erfindung mit fliegenden Reiblamellen
Figur 6: eine schematisierte, vergrößerte Darstellung der Zeichnung nach Figur 5
Figur 7: ein räumlicher Schnitt durch eine Anordnung nach Figuren 5 und 6
Figur 8: eine räumliche, perspektivische Darstellung einer Kupplung nach der Erfindung mit fliegenden Reiblamellen

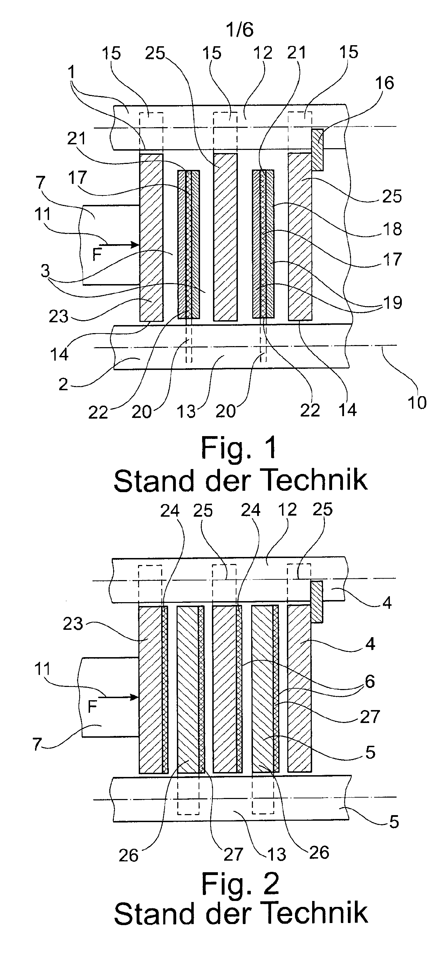

In Figuren 1, 2 und 3 ist der Stand der Technik schematisiert dargestellt. Einer Antriebsseite 1 einer herkömmlichen Kupplung liegt eine Abtriebsseite 2 gegenüber, und zwischen den beiden Seiten 1, 2 entsteht an den Außenseiten der jeweils dort angeordneten Belagslamellen 17 Reibwärme 3.

Die Figur 2 zeigt als zweites Ausführungsbeispiel die sogenannte Single-Side-Disc, wo erkennbar ist, dass wiederum einer Antriebsseite 4 eine Abtriebsseite 5 gegenüberliegt und im Bereich der Beläge 27 Reibwärme 6 entsteht.

Die Kupplungen nach Figuren 1 und 2 sind jeweils rotationssymmetrisch zur Rotationsachse 10 ausgebildet. Es handelt sich jeweils um einen Teilschnitt durch eine rotationssymmetrische Kupplung.

Der Kupplungsschluss wird durch Aufbringung einer Kraft F über einen Kolben 7 erreicht, der mit seiner Fläche in Pfeilrichtung 11 eine Andruckkraft erzeugt, die von der ersten, linksseitig angeordneten Startlamelle 23 als axiale Verschiebungskraft in das Lamellenpaket eingeleitet wird.

Zu diesem Zweck zeigt die Figur 1, dass die Startlamelle 23 mit einer Verzahnung 15 versehen ist und hierdurch auf der zugeordneten Verzahnung des Außenlamellenträgers 12 axial verschiebbar ausgebildet ist.

Gleiches gilt auch für die parallel hierzu angeordneten weiteren Metalllamellen 25, welche auf der Antriebsseite der bekannten Kupplung angeordnet sind.

Auf der Abtriebsseite dieser Kupplung ist der Innenlamellenträger 13 jeweils mit einer Verzahnung 20 ausgerüstet, und im Bereich dieser Verzahnung sind die Belagslamellen 17 angeordnet, wobei jede Belagslamelle auf jeder Seite einen Reibbelag 19 trägt.

Die Figuren 1 und 2 zeigen außerdem beim Stand der Technik, dass die auf der - Antriebsseite angeordneten Metalllamellen 15 einen in radialer Richtung in Richtung zum Innenlamellenträger 13 gerichteten Freiraum 14 aufweisen, und dass umgekehrt auch die mit einer Verzahnung 20 am Innenlamellenträger 13 angeordneten und dort axial verschiebbar ausgebildeten Belagslamellen 17 radial auswärts einen Freiraum 21 zur Innenseite des Außenlamellenträgers 12 aufweisen.

Bei Einwirkung einer durch den Kolben 7 erzeugten axialen Andruckkraft 11 wird somit das Lamellenpaket geschlossen, indem alle Lamellenbeim Kupplungsschluss axial ineinander verschoben werden, und zwar gegen einen ortsfesten Sprengring 16, der am Außenlamellenträger 12 angeordnet ist.

Die Figur 2 zeigt als weiteren Stand der Technik, dass auf die Belagslamellen 17 verzichtet werden kann, und dass die Reibbeläge 27 direkt an den einander zugewandten Seiten der Startlamelle 23 und Metalllamelle der Antriebsseite 26 und der jeweiligen Metalllamelle 25 auf der Antriebsseite ausgebildet sein können.

Die antriebsseitigen Lamellen tragen demnach die Reibbeläge 24, während die abtriebsseitig angeordneten Metalllamellen 26 die Reibbeläge 27 tragen.

Anstatt der Verwendung eines Kerns 18 bei den Belagslamellen 17 nach der Figur 1 wird in Figur 2 auf einen solchen Kern verzichtet, weil die Reibbeläge 24, 27 direkt an den Metalllamellen 25, 26 an der Antriebs- und Abtriebsseite angeordnet sind.

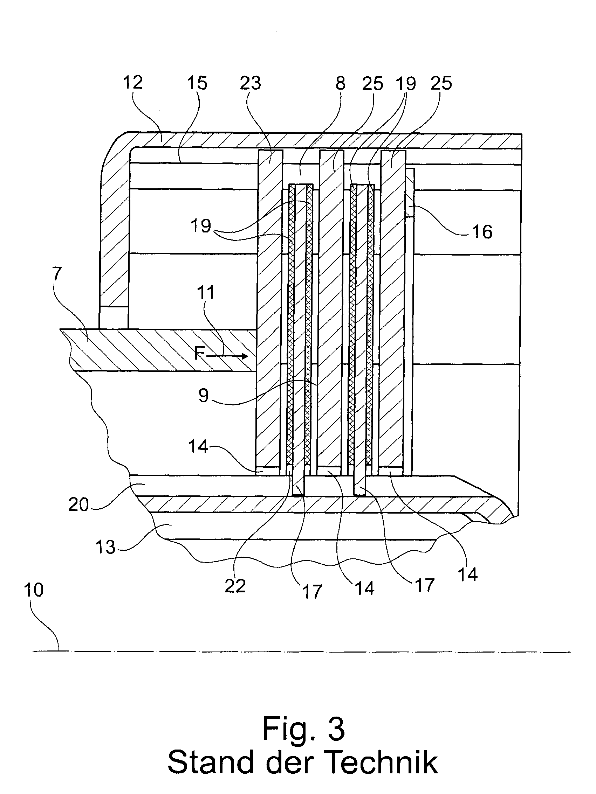

Die Figur 3 nach dem Stand der Technik zeigt eine gleiche Darstellung wie Figur 1 mit Darstellung weiterer Einzelheiten. Dort ist erkennbar, dass die jeweils axial verschiebbaren Belagslamellen 17 in einem radialen Aufnahmeraum 8 laufen, und dazwischen liegende axiale Zwischenräume 9 vorgesehen sind, wobei die axialen Zwischenräume 9 relativ groß dimensioniert werden müssen, um eine ausreichende Wärmeabfuhr im gesamten Aufnahmeraum 8 mit den Zwischenräumen 9 zu gewährleisten.

Die Figur 1 zeigt außerdem, dass die Belagslamellen 17 in Richtung zum abtriebsseitigen Innenlamellenträger 13 einen Freiraum bilden.

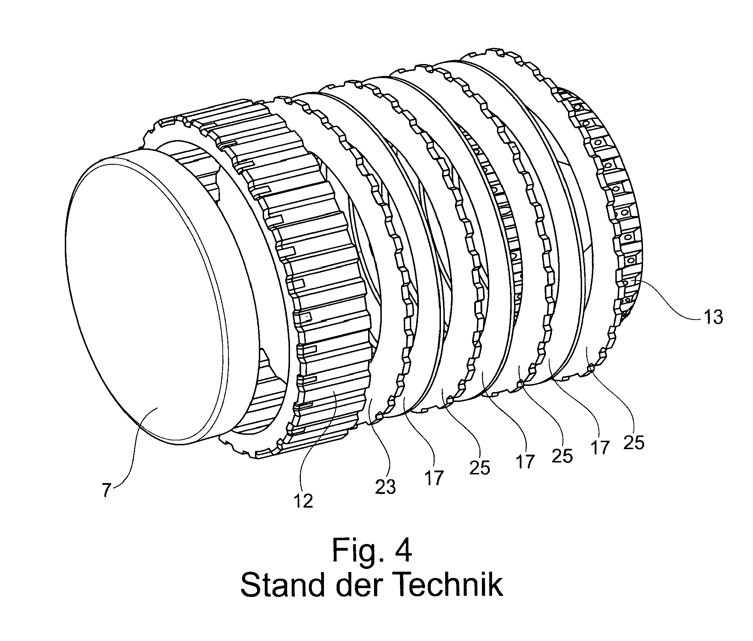

Die Figur 4 zeigt als Stand der Technik eine Anordnung einer Mehrscheibenkupplung nach Figuren 1 und 3, bei der die gleichen Teile gemäß Figuren 1 und 3 räumlich dargestellt sind. Es ist erkennbar, dass eine relativ große Baulänge verwendet werden muss, um ein bestimmtes Drehmoment bei bestimmter Wärmeentwicklung übertragen zu können.

Dieses Problem wird nun mit den Merkmalen der Erfindung gelöst.

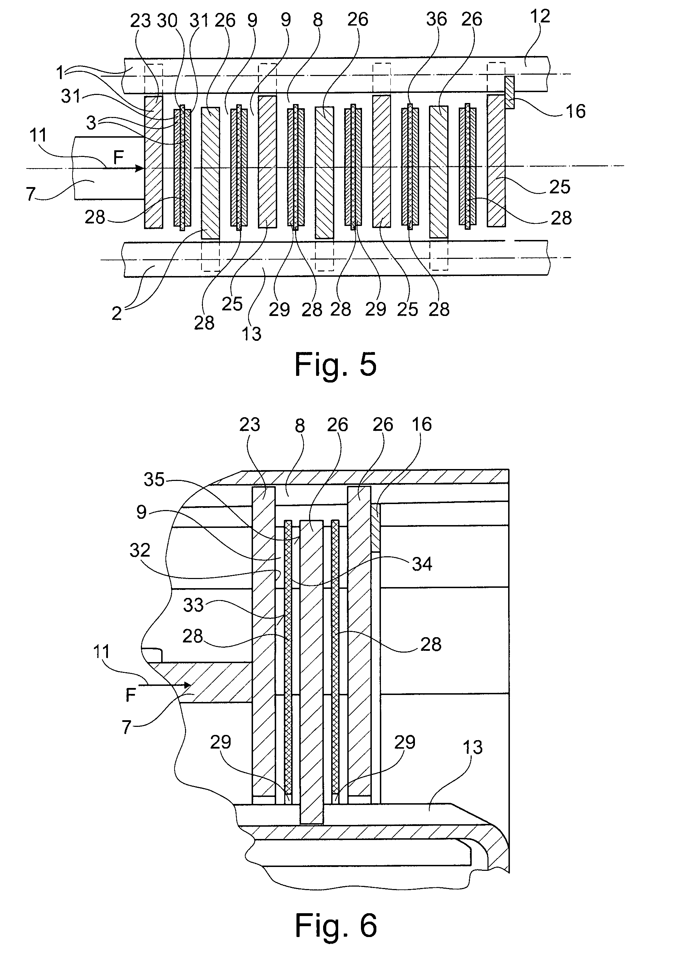

Die Figuren 5 bis 8 zeigen die erfindungsgemäße neuartige Kupplung, die sich dadurch auszeichnet, dass im Zwischenraum zwischen den antriebsseitigen Metalllamellen 25 und den abtriebsseitigen Metalllamellen 26 nun jeweils fliegend gelagerte Reiblamellen 28 angeordnet sind.

Zwar zeigt die Zeichnung nach Figur 5, dass eine solche Reiblamelle 28 auch mehrschichtig aufgebaut sein kann und aus einem Kern und beidseitig angebrachten Reibbelägen bestehen kann. Hierauf ist die Erfindung jedoch nicht beschränkt. Wie die Figur 6 zeigt, kann der mehrschichtige Aufbau einer Reiblamelle auch durch einen einschichtigen Aufbau ersetzt werden, wobei die Reiblamelle 28 dann nur noch aus einem kunststoffverstärkten oder metallfaser- oder kohlenstoffverstärkten Papiermaterial oder einem anderen tränkbaren Material (z.B. einem Vlies und/oder Gewirk und/oder Gestrick) besteht.

Wichtig ist, dass sich die jeweilige Reiblamelle 28 im Aufnahmeraum 8 freischwimmend selbsttätig radial und axial einstellt und je nach dem Abstand zum Außenumfang des Innenlamellenträgers 13 oder dem radialen Abstand zum Innenumfang des Außenlamellenträgers 12 sich entweder in Richtung auf den Innenlamellenträger 13 selbsttätig auf diesem zentriert oder sich selbsttätig am Innenumfang des Außenlamellenträgers 12 zentriert.

Mit einem Verkantungsspiel in axialer Richtung muss nicht gerechnet werden, weil die fliegend gelagerte Reiblamelle 28 in sich so steif ist, dass sie mit ihrem Innenumfang entweder auf den Außenumfang des Innenlamellenträgers oder mit seinem Außenumfang an der Innenseite des Außenlamellenträgers zentrisch geführt ist, sodass ein Verkantungsspiel nicht zu befürchten ist.

Wichtig ist demnach, dass sich die jeweils fliegend gelagerte Reiblamelle 28 im Aufnahmeraum 8 zwischen den antriebs- und abtriebsseitigen Metalllamellen 25, 26 selbsttätig in axialer und radialer Richtung schwimmend einstellt, und erst beim Schluss der Kupplung, wenn die axiale Andruckkraft 11 über den Kolben 7 aufgebracht wird, verschwinden die Zwischenräume 9 zwischen den einander zugeordneten Reibflächen 32, 33, 34, 35 und die Reiblamelle 28 überträgt das Drehmoment.

Demnach bildet die (nächst dem Kolben 7 angeordnete) Startlamelle 23 mit ihrer Innenseite eine Reibfläche 32 in Richtung auf die linke Reibfläche 33 an der fliegend gelagerten Reiblamelle 28, und deren gegenüberliegende Reibfläche 34 bildet eine weitere, die axiale Andruckkraft des Kolbens 7 übertragende Fläche zu der Reibfläche 35 an der linken Seite der abtriebsseitigen Metalllamelle 26 aus.

Die Erfindung ist nicht darauf beschränkt, dass die Reibflächen der Reiblamelle 28 durchgehend glatt und strukturiert ausgebildet sind.

In einer anderen Ausgestaltung der Erfindung kann es vorgesehen sein, dass die Reibflächen 33, 34 der jeweils fliegend sich einstellenden Reiblamelle 28 strukturiert ausgebildet sind. Unter einer solchen Struktur wird verstanden, dass im Winkel zur Drehrichtung schräg verlaufende Noppen, Erhöhungen oder auch Nuten zur besseren Ableitung des Ölstroms oder eines anderen flüssigen oder gasförmigen Wärmeträgermediums von der Oberfläche der Reiblamelle 28 vorgesehen sind, der im Zwischenraum 9 jeweils links- und rechtsseitig der Reiblamelle 28 besteht.

Ferner ist nicht lösungsnotwendig, dass die Reiblamelle 28 eben ausgebildet ist. Die Oberfläche kann leicht gewellt ausgebildet sein, um ein selbsttätiges Rückfedern in die nicht gekuppelte Stellung zu ermöglichen. Sie wirkt dann in der Art einer Tellerfeder. Damit wird eine kupplungsseitige Rückstellfeder eingespart, die eine Rückstellkraft erzeugt, die ansonsten bei derartigen Kupplungen notwendig ist. Bei Entfall der kupplungsseitigen Rückstellfeder wird die Baulänge durch die in axialer Richtung federnd ausgebildete Reiblamelle noch weiter minimiert.

Bei der schwimmend oder fliegend gelagerten Reiblamelle 28 ergibt sich radial einwärts ein Spaltraum 29, der vom Ölstrom oder dem flüssigen oder gasförmigen Wärmeträgerstrom durchflossen ist, und der für eine automatische Zentrierung der Reiblamelle 28 auf dem Außenumfang des Innenlamellenträgers 13 sorgt.

Eine solche Anordnung kann jedoch auch vollkommen ohne Öl betrieben werden, es handelt sich dann um eine Trockenkupplung mit einem gasförmigen Wärmeträgermedium.

Dann ergibt sich radial auswärts am Außenumfang der fliegenden Reiblamelle 28 ein Spaltraum 36 in Richtung auf den Innenumfang des Außenlamellenträgers 12. Auch in diesem Bereich stellt sich die Reiblamelle fliegend selbsttätig ein.

Nachdem ein üblicher Zwischenraum 9 auf beiden Seiten der Reibflächen 33, 34 der Reiblamelle 28 etwa 1 mm beträgt, besteht auch nicht die Gefahr, dass sich eine solche fliegend gelagerte Reiblamelle 28 unerwünscht in axialer Richtung verkantet. Sie wird stets verkantungsfrei gerade geführt.

Während die Figur 5 eine aus mehreren Schichten bestehende Reiblamelle 28 mit einer Kernschicht 30 und zwei äußeren Belagsschichten 31 zeigt, zeigt die Figur 6 einen einschichtigen Aufbau einer solchen Reiblamelle.

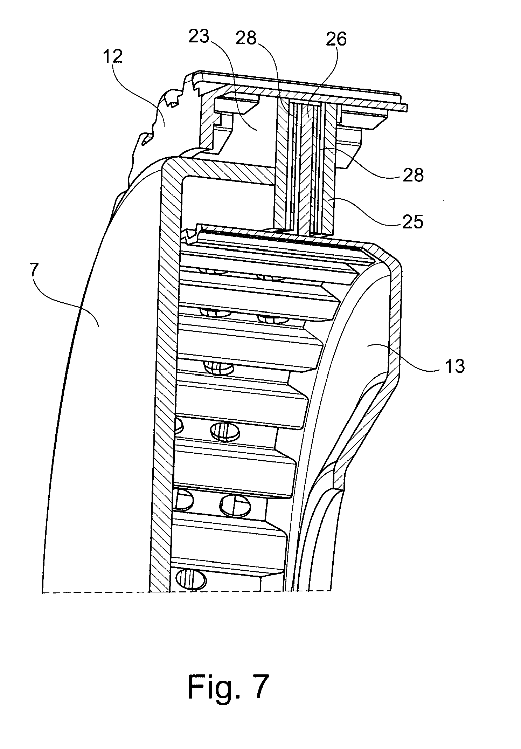

Die Figur 7 zeigt einen perspektivischen Schnitt durch eine Kupplung nach der Darstellung nach Figur 6, wo die gleichen Teile mit den gleichen Bezugszeichen versehen sind.

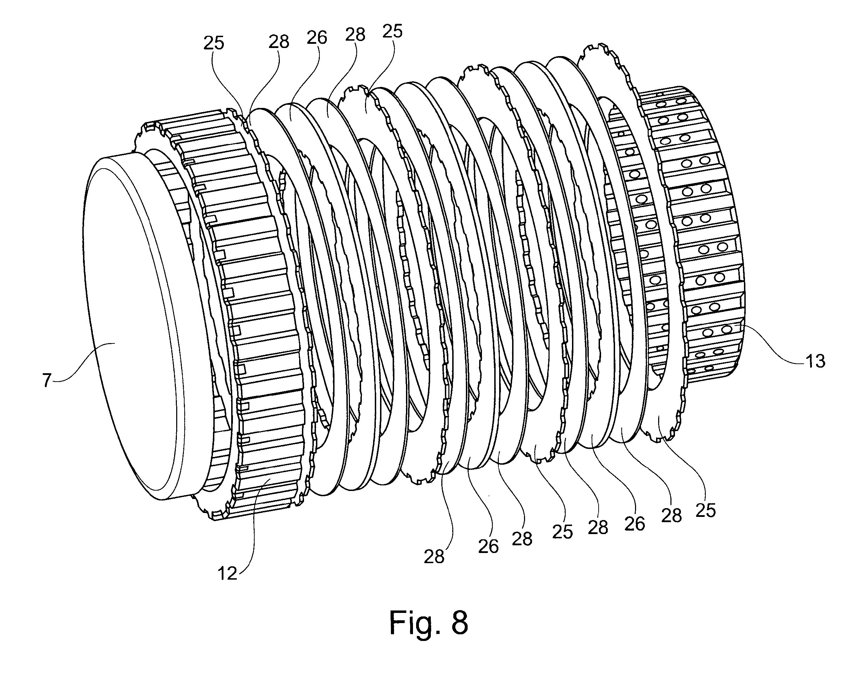

Dies gilt auch für die Figur 8, wo die gleichen Teile mit den gleichen Bezugszeichen versehen sind.

Die perspektivische Darstellung in Figur 8 zeigt den voll rotationssymmetrischen Aufbau der erfindungsgemäßen Kupplung. Ausgehend von der eine Verzahnung aufweisenden Startlamelle 23, die sich am Innenumfang des Außenlamellenträgers 12 anlegt folgt auf diese die erfindungsgemäßen Reib- oder Bremslamelle 28, die sich frei im Zwischenraum zwischen dem Innenlamellenträger 13 und Außenlamellenträger 12 einstellt.

An der anderen Seite der Reib- oder Bremslamelle 28 ist die abtriebsseitige Metalllamelle 26 angeordnet, die sich mit ihrer innen liegenden Verzahnung in drehfestem, jedoch axial verschieblichen Eingriff mit der Verzahnung des Innenlamellenträgers 13 befindet. Darauf folgt wieder eine Reib- oder Bremslamelle 28, an deren gegenüberliegenden Seite sich die antriebsseitige Metalllamellen 25 anschließt. Diese weist eine außen liegende Verzahnung auf, die sich im formschlüssigen, jedoch axial verschieblichen Eingriff mit dem Innenumfang des Außenlamellenträgers 12 befindet.

Die vorher beschriebenen Reibpaarungen wiederholen sich in beliebiger Weise über die Länge der Kupplung gesehen

Im Vergleich zur Figur 4 werden auf der gleichen Baulänge wesentlich mehr schwimmend gelagerte Reib- oder Bremslamellen angeordnet, woraus sich ergibt, dass mit einer Kupplung gleicher Baulänge, wie beim Stand der Technik nach Figur 4, ein wesentlich höheres Drehmoment bei geringerer Wärmeentwicklung übertragen werden kann.

Aus zeichnerischen Vereinfachungsgründen wurde lediglich die Darstellung nach Figur 8 etwas weiter auseinandergezogen als vergleichsweise die Darstellung nach Figur 4, wobei jedoch beide Darstellungen die gleiche Baulänge der Kupplung zeigen.

### Zeichnungslegende

- 1: Antriebsseite
- 2: Abtriebsseite
- 3: Reibwärme
- 4: Antriebsseite
- 5: Abtriebsseite
- 6: Reibwärme
- 7: Kolben
- 8: Aufnahmeraum
- 9: Zwischenraum
- 10: Rotationsachse
- 11: Andruckkraft
- 12: Außenlamellenträger
- 13: Innenlamellenträger
- 14: Freiraum
- 15: Verzahnung
- 16: Sprengring
- 17: Belagslamelle
- 18: Kern
- 19: Reibbelag
- 20: Verzahnung
- 21: Freiraum
- 22: Freiraum
- 23: Startlamelle
- 24: Reibbelag
- 25: Metalllamelle (Antriebsseite)
- 26: Metalllamelle (Abtriebsseite)
- 27: Reibbelag (Abtriebsseite)
- 28: Reiblamelle (fliegend)
- 29: Spaltraum (innen)
- 30: Kernschicht
- 31: Belagsschicht
- 32: Reibfläche
- 33: Reibfläche
- 34: Reibfläche
- 35: Reibfläche
- 36: Spaltraum

## Patentansprüche

1. Kupplung bestehend aus einem drehend angetriebenen Außenlamellenträger (12), an dem eine Anzahl von axial verschiebbar gelagerten Metalllamellen (25) drehfest angeordnet sind, welche die Antriebsseite (1) der Kupplung ausbilden, und die Abtriebsseite durch einen Innenlamellenträger (13) gebildet ist, auf dessen axial gerichteter Verzahnung abtriebsseitige Metalllamellen (26) angeordnet, und im Zwischenraum (9) zwischen den Metalllamellen (25) der Antriebsseite (1) und den Metalllamellen (26) der Abtriebsseite (2) axial verschiebbare Reib- oder Bremslamellen (27, 28) angeordnet sind, **dadurch gekennzeichnet, dass** die Reib- oder Bremslamellen (27, 28) freifliegend ausgebildet sind und sich selbsttätig im Zwischenraum (9) zwischen den antriebs- und abtriebsseitigen Metalllamellen (25, 26) in radialer und axialer Richtung einstellen.

2. Kupplung nach Anspruch 1, **dadurch gekennzeichnet, dass** Reib- oder Bremslamellen (27, 28) weder drehfest mit dem Außenlamellenträger (12) noch drehfest mit dem Innenlamellenträger (13) gekuppelt sind.

3. Kupplung nach Anspruch 1 oder 2, **dadurch gekennzeichnet, dass** die Reib- oder Bremslamellen (27, 28) am Innen- und am Außenumfang verzahnungsfrei ausgebildet sind.

4. Kupplung nach einem der Ansprüche 1 bis 3, **dadurch gekennzeichnet, dass** sich die Reib- oder Bremslamellen (27, 28) mit ihrem unverzahnten Außenumfang am Innenumfang des Außenlamellenträgers (12) zentrieren.

5. Kupplung nach einem der Ansprüche 1 bis 4, **dadurch gekennzeichnet, dass** sich die Reib- oder Bremslamellen (27, 28) mit ihrem unverzahnten Innenumfang am Außenumfang des Innenlamellenträgers (13) zentrieren.

6. Kupplung nach einem der Ansprüche 1 bis 5, **dadurch gekennzeichnet, dass** die Reib- oder Bremslamellen (27, 28) im ungekuppelten Zustand mit etwa der Hälfte der Geschwindigkeit des Außenlamellenträgers (12) umlaufen, wenn der Innenlamellenträger (13) stillsteht.

7. Reib- oder Bremslamelle als scheibenförmiges Element einer drehmomentenübertragenden Brems- oder Kupplungseinrichtung, **dadurch gekennzeichnet, dass** die Reib- oder Bremslamelle (27, 28) am Außen- und am Innenumfang unverzahnt und glatt ausgebildet ist.

8. Reib- oder Bremslamelle nach Anspruch 7, **dadurch gekennzeichnet, dass** die Reib- oder Bremslamelle (27, 28) am Außen- und am Innenumfangfrei von drehmomentenübertragenden Elementen ist.

9. Reib- oder Bremslamelle nach Anspruch 7 oder 8, **dadurch gekennzeichnet, dass** die Reib- oder Bremslamelle (27, 28) aus einem harzgetränkten Papiermaterial besteht.

10. Reib- oder Bremslamelle nach einem der Ansprüche 7 bis 9, **dadurch gekennzeichnet, dass** die Reib- oder Bremslamelle(27, 28) aus Papier-Kunststoff-Verbundwerkstoffen besteht oder aus textilen Fäden oder Garnen oder Kohlestofffasern gewebt oder gewirkt ist.
